# EUROPÄISCHE PATENTSCHRIFT

(11) **EP 1 937 521 B1**
(45) Veröffentlichungstag und Bekanntmachung des Hinweises auf die Patenterteilung: **25.11.2009**
(21) Anmeldenummer: 06806202.5
(22) Anmeldetag: 12.10.2006
(51) Int. Cl.: B60R 22/195

(54) **RÜCKHALTESYSTEM MIT GURTAUFROLLER UND STRAFFVORRICHTUNG**
RESTRAIN SYSTEM FOR A BELT RETRACTOR AND TENSIONING DEVICE
SYSTEME DE RETENUE EQUIPE D'UN ENROULEUR DE CEINTURE DE SECURITE ET D'UN DISPOSITIF DE PRETENSION

(30) Priorität: 21.10.2005 DE 102005050426; 25.10.2005 DE 102005051042
(43) Veröffentlichungstag der Anmeldung: 02.07.2008
(73) Patentinhaber: AUTOLIV DEVELOPMENT AB, 447 83 Vargarda (SE)
(72) Erfinder: SINGER, Klaus Peter, 22399 Hamburg (DE); EHLERS, Jens, 25358 Horst (DE)
(74) Vertreter: Müller, Karl-Ernst
(86) Internationale Anmeldenummer: PCT/EP2006/009843
(87) Internationale Veröffentlichungsnummer: WO 2007/045391

(56) Entgegenhaltungen:
- WO-A-90/11913
- WO-A-2004/069614
- DE-U1- 9 104 917

## Beschreibung

Die Erfindung betrifft ein Rückhaltesystem für ein Kraftfahrzeug mit einem das eine Ende eines Sicherheitsgurtbestandteils aufnehmenden Gurtaufroller, der eine Gurtwelle und eine ein an die Gurtwelle angeschlossenes Antriebsseil aufweisende Straffvorrichtung aufweist, wobei an ein Ende des Wellenkörpers eine axial und radial unverschieblich angeordnete und den Antriebsradius des Wellenkörpers vergrößernde sowie eine Untersetzung des Strafferantriebes einrichtende Halterung für das Antriebsseil angeschlossen ist.

Ein Rückhaltesystem der vorgenannten Art ist in der DE 91 04 917 U1 beschrieben. Bei dem bekannten Rückhaltesystem ist an einem Ende der Gurtwelle eine Riemenscheibe befestigt, um deren Umfang ein Antriebsseil geschlungen ist, welches seinerseits an der Riemenscheibe befestigt ist. Die Riemenscheibe weist einen größeren Durchmesser als die Gurtwelle auf, so dass dadurch der Antriebsradius der Gurtwelle vergrößert und eine Untersetzung des Strafferantriebes eingerichtet ist.

Ein anderes Rückhaltesystem ist aus der DE 103 04 943 B3 bekannt. Bei diesem Rückhaltesystem ist der zugehörige Gurtaufroller Teil eines Endbeschlagstraffers, bei dem das eine an der Fahrzeugstruktur festzulegende Ende des Sicherheitsgurtes an dem Wellenkörper festgelegt ist, so dass dieses Ende des Sicherheitsgurtes bei Auslösung des Strafferantriebs auf dem Wellenkörper aufgewickelt und dadurch gestrafft wird. Die Verriegelung des Wellenkörpers mit dem Gurtaufrollergehäuse ist derart verwirklicht, dass das Sperrglied im Inneren des hohl ausgebildeten Wellenkörpers angeordnet ist und durch eine in dem Wellenkörper ausgebildete Durchtrittsöffnung mittels Federwirkung über den äußeren Umfang des Wellenkörpers bis zum Eingriff in die zugeordnete Verzahnung des die Gurtwelle lagernden Gehäuseschenkels vorgespannt ist. Somit befindet sich das Sperrglied in einer permanenten Verriegelung mit dem Gurtaufrollergehäuse, so dass das Ende des Sicherheitsgurtes entsprechend festgelegt und damit fahrzeugfest befestigt ist. Bei Auslösung des Strafferantriebs ratscht das Sperrglied bei entsprechender Drehung der Gurtwelle in Gurtstraffrichtung über die Verzahnung des Gehäuseschenkels hinweg, während bei einer nach Abschluss der Straffbewegung erfolgenden Drehung der Gurtwelle in Gurtauszugsrichtung die sofortige Blockierung der Gurtwelle erfolgt.

Der Erfindung liegt die Aufgabe zugrunde, bei einem Rückhaltesystem mit den gattungsgemäßen Merkmalen bei Beibehaltung der Übertragungsverhältnisse eine Anordnung des Sperrgliedes im Inneren der Gurtwelle nach dem Vorbild der DE 103 04 943 B3 einzurichten.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht im einzelnen vor, dass die Halterung aus einer auf ein Ende des Wellenkörpers geschobenen, eine zur Vergrößerung des Antriebsradius bemessene Wandstärke aufweisenden Hülse besteht, und dass die Gurtwelle als Hohlwelle mit einem im Inneren des Wellenkörpers angeordneten Sperrglied ausgebildet ist, und dass die Hülse über das das Sperrglied aufnehmende und in dem Gehäuseschenkel gelagerte Ende des Wellenkörpers geschoben ist und eine mit der Durchtrittsöffnung des Wellenkörpers für das Sperrglied fluchtende Öffnung aufweist.

In der Zeichnung ist ein Ausführungsbeispiel der Erfindung wiedergegeben, welches nachstehend beschrieben ist. Es zeigen:
- Fig. 1: einen Schlossstraffer in einer Gesamtansicht,
- Fig. 2: den Schlossstraffer gemäß Figur 1 in einer Schnittansicht,
- Fig. 3: die das Sperrglied aufweisende Verriegelungsseite des Gurtaufrollers,
- Fig. 4: die Verriegelungsebene des Gurtaufrollers in einer geschnittenen Vorderansicht,

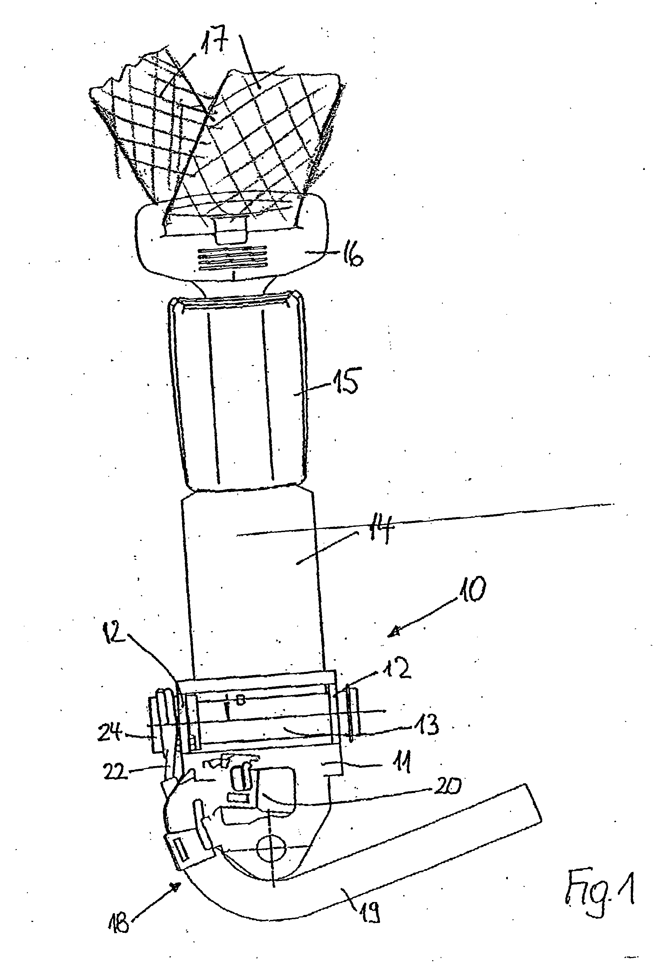

Bei der aus Figur 1 ersichtlichen Anordnung 10 mit einem Gurtaufroller und einer Straffvorrichtung besteht der Gurtaufroller aus einem U-förmigen Gurtaufrollergehäuse 11, in dessen Gehäuseschenkeln 12 eine Gurtwelle 13 gelagert ist, auf der ein Gurtband 14 aufgewickelt ist. An dem freien Ende des Gurtbandes 14 ist ein Gurtschloss 15 befestigt, in welches eine Schlosszunge 16 eingesteckt beziehungsweise daraus lösbar ist, wobei die Schlosszunge 16 an einem Sicherheitsgurt 17 geführt ist. Derartige Sicherheitsgurtanordnungen sind bekannt. Um das Gurtschloss 15 durch Aufwickeln des Gurtbandes 14 auf der Gurtwelle 13 einer Straffung unterziehen zu können, ist an einem Gehäuseschenkel 12 eine Straffvorrichtung 18 befestigt, bestehend aus einem Strafferrohr 19 und einer Gasgeneratoraufnahme 20. Die Verbindung zwischen der Straffvorrichtung 18 und der Gurtwelle 13 geschieht über ein Antriebsseil 22, welches auf einem Wellenfortsatz 24 der Gurtwelle 13 aufgewickelt und mit seinem Ende daran befestigt ist.

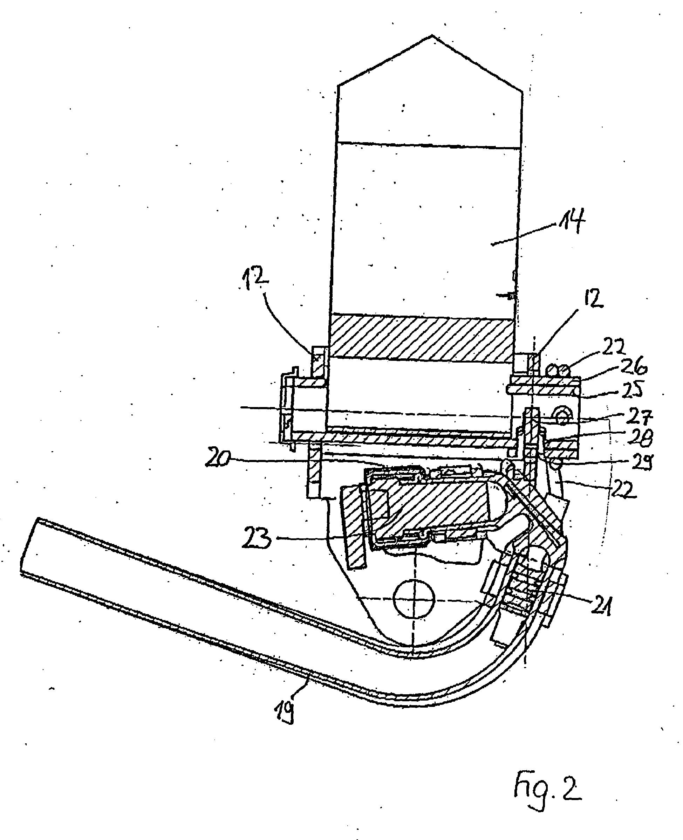

Wie sich aus Figur 2 zusätzlich ergibt, ist das an die Straffvorrichtung 18 angeschlossene Ende des Antriebsseils 22 in das Strafferrohr 19 hineingeführt und hier an einen Kolben 21 angeschlossen, der in dem Strafferrohr 19 beweglich ist. In der Gasgeneratoraufnahme 20 des Strafferrohres 19 ist ein Gasgenerator 23 angeordnet, der bei seiner Auslösung entsprechende Antriebsgase freisetzt, die den Kolben 21 in dem Strafferrohr 19 vorantreiben, so dass das Antriebsseil 22 von dem Wellenfortsatz 24 der Gurtwelle 13 abgewickelt und somit die Gurtwelle 13 in Drehung versetzt wird.

Die Gurtwelle 13 hat einen hohl ausgebildeten Wellenkörper 25, auf dem das Gurtband 14 aufgewickelt ist. In der Ebene des von dem Wellenfortsatz 24 durchgriffenen Gehäuseschenkels 12 ist im Inneren des Wellenkörpers 25 ein Sperrglied 27 angeordnet, welches mit wenigstens einem Zahn eine in dem Wellenkörper 25 angeordnete Durchtrittsöffnung 28 durchgreift. Zur Vergrößerung des Straffradius ist den Wellenfortsatz 24 übergreifend auf den Wellenkörper 25 eine Hülse 26 aufgeschoben, auf deren äußerem Umfang das Antriebsseil 22 aufgewickelt ist. Die Hülse 26 weist eine mit der Durchtrittsöffnung 28 des Wellenkörpers 25 fluchtende Öffnung 29 zum Durchtritt des Sperrgliedes 27 auf, so dass das Sperrglied in seiner ausgeschwenkten Blockierstellung in Eingriff mit der zugeordneten Verzahnung des Gehäuseschenkels 12 steht. Wie nicht weiter dargestellt, ist das Sperrglied 27 entsprechend der Beschreibung der DE 103 04 943 B3, die hiermit auch zum Gegenstand der vorliegenden Offenbarung gemacht wird, von einem Federelement in dessen ausgelenkte Blockierstellung vorgespannt, so dass das Sperrglied 27 bei Drehung der Gurtwelle 13 in Straffrichtung über die Verzahnung des Gehäuseschenkels 12 hinweg ratscht und bei einer nach Abschluss der Straffbewegung erfolgenden Drehung der Gurtwelle 13 in Gurtauszugsrichtung die sofortige Blockierung der Gurtwelle 13 bewirkt.

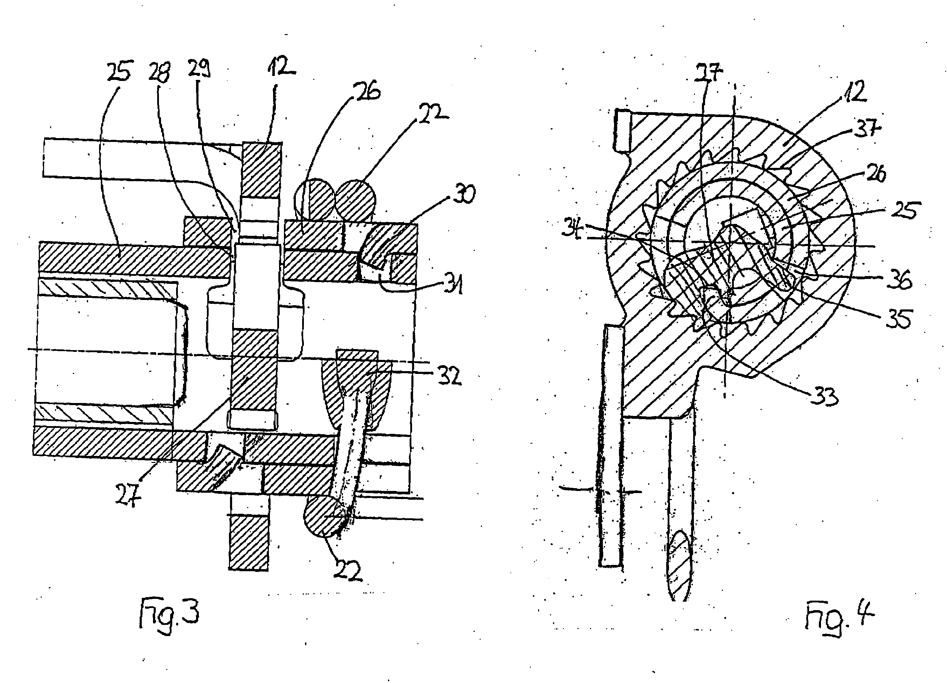

Wie Figur 3 näher zu entnehmen ist, ist die Hülse 26 auf dem Wellenkörper 25 axial und radial unverschieblich festgelegt, indem aus der Hülse 26 nach innen in die Ebene des Wellenkörpers 25 hineinragende Vorsprünge 30 herausgeprägt sind, die ihrerseits in in der Hülse 26 ausgebildete Ausnehmungen 31 eingreifen. Bei dem dargestellten Ausführungsbeispiel sind zwei diametral gegenüberliegende Vorsprünge 30 mit Ausnehmungen 31 dargestellt, wobei die Vorsprünge 30 in Axialrichtung des Wellenkörpers 25 geneigt ausgerichtet sind derart, dass ihre Längsachse die Längsachse des Wellenkörpers 25 schneidet. Die einander gegenüberliegenden Vorsprünge 30 sind dabei mit einer gegenläufigen Neigung angeordnet, so dass die Hülse 26 an dem Wellenkörper 25 axial und radial unverschieblich festgelegt ist, In Figur 3 ist weiterhin die Seileinhängung 32 für das Antriebsseil 22 zu erkennen, die bei dem dargestellten Ausführungsbeispiel im Inneren des Wellenkörpers 25 vorgesehen ist, so dass das Antriebsseil 22 durch eine entsprechende Freimachung in der Hülse 26 zu deren äußerem Umfang verläuft.

Aus Figur 4 ist schließlich die Anordnung und Lagerung des Sperrgliedes 27 in dem hohlen Wellenkörper 25 ersichtlich, die der Beschreibung in der gattungsbildenden DE 103 04 943 B3 entspricht. Hierbei stützt sich das mit einem Lageransatz 35 in einer jeweils sowohl im Wellenkörper 25 als auch in der Hülse 26 ausgebildeten Durchbrechung 36 gelagerte Sperrglied 27 im Eingriffszustand mit der Verzahnung 37 des zugeordneten Gehäuseschenkels 12 an einem als einwärts gekrümmte Nase 33 ausgebildeten Randbereich der Öffnung 29 der Hülse 26 ab, die in eine in dem Sperrglied 27 ausgebildete Tasche 34 eingreift. Somit erfolgt die Einleitung der Abstützkraft einerseits in die Hülse 26, andererseits über den Lageransatz 35 sowohl in die Hülse 26 als auch in den Wellenkörper 25.

## Patentansprüche

1. Rückhaltesystem für ein Kraftfahrzeug mit einem das eine Ende eines Sicherheitsgurtbestandteils aufnehmenden Gurtaufroller, der eine Gurtwelle (13) und eine ein an die Gurtwelle (13) angeschlossenes Antriebsseil (22) aufweisende Straffvorrichtung aufweist, wobei an ein Ende des Wellenkörpers (25) eine axial und radial unverschieblich angeordnete und den Antriebsradius des Wellenkörpers (25) vergrößernde sowie eine Untersetzung des Strafferantriebes einrichtende Halterung für das Antriebsseil (22) angeschlossen ist, **dadurch gekennzeichnet, dass** die Halterung aus einer auf ein Ende des Wellenkörpers (25) geschobenen, eine zur Vergrößerung des Antriebsradius bemessene Wandstärke aufweisenden Hülse (26) besteht, und dass die Gurtwelle (13) als Hohlwelle mit einem im Inneren des Wellenkörpers (25) angeordneten Sperrglied (27) ausgebildet ist, und dass die Hülse (26) über das das Sperrglied (27) aufnehmende und in dem Gehäuseschenkel (12) gelagerte Ende (24) des Wellenkörpers (25) geschoben ist und eine mit der Durchtrittsöffnung (28) des Wellenkörpers (25) für das Sperrglied (27) fluchtende Öffnung (29) aufweist.

2. Rückhaltesystem nach Anspruch 1, **dadurch gekennzeichnet, dass** die Straffvorrichtung als Schlossstraffer ausgelegt ist und an dem anderen Ende des Sicherungsgurtbestandteils ein Gurtschloss (15) des Rückhaltesystems befestigt ist.

3. Rückhaltesystem nach Anspruch 1, **dadurch gekennzeichnet, dass** der Gurtaufroller als das Ende des Sicherheitsgurtes aufnehmender Endbeschlagstraffer ausgebildet ist.

## Claims

1. A restraining system for a motor vehicle having a seat belt retractor accommodating the one end of a seatbelt component, which has a belt shaft (13) and a tensioning device that has a driving cable (22) attached to the belt shaft (13) whereby to one end of the shaft element (25) a holding element for the driving cable (22) is attached which is axially and radially immovably arranged and enlarges the driving radius of the shaft element (25) and causes a reduction in speed of the tensioning device, **characterized in that** the holding element is consisting of a sleeve (26) slid on one end of the shaft element (25) and having a wall thickness in such a way that the driving radius of the shaft element (25) is enlarged and that the belt shaft (13) is configured as a hollow shaft with a locking element (27) arranged in the interior of the shaft element (25), and that the sleeve (26) is slid on the end (24) of the shaft element (25) that accommodates the locking element (27), and is mounted in the housing leg (12), and has an opening (29), which is flush with the passage opening (28) of the shaft element (25) for the locking element (27).

2. Restraining system according to claim 1, **characterized in that** the tensioning device is designed as a buckle tensioner and a belt buckle (15) of the restraining system is mounted on the other end of the seat belt component.

3. Restraining system according to claim 1, **characterized in that** the seat belt retractor is configured as an end fitting tensioner that accommodates the end of the seat belt.

## Revendications

1. Système de retenue pour un véhicule automobile avec un enrouleur de ceinture recevant une des extrémités d'un composant de ceinture de sécurité, qui présente un arbre de ceinture (13) et un dispositif de prétension présentant un câble d'entraînement (22) raccordé à l'arbre de ceinture (13), un support, disposé de manière axialement et radialement inamovible et agrandissant le rayon d'entraînement du corps d'arbre (25) et en rétablissant une démultiplication de l'entraînement du prétensionneur, pour le câble d'entraînement (22) étant raccordé à une extrémité du corps d'arbre (25), **caractérisé en ce que** le support est constitué d'une douille (26) poussée sur une extrémité du corps d'arbre (25), présentant une épaisseur de paroi dimensionnée pour augmenter le rayon d'entraînement, et **en ce que** l'arbre de ceinture (13) est réalisé sous forme d'arbre creux avec un organe de verrouillage (27) disposé à l'intérieur du corps d'arbre (25), et **en ce que** la douille (26) est poussée sur l'extrémité (24) du corps d'arbre (25) recevant l'organe de verrouillage (27) et logée dans l'aile du boîtier (12) et présente une ouverture (29) alignée avec l'ouverture de passage (28) du corps d'arbre (25) pour l'organe de verrouillage (27).

2. Système de retenue selon la revendication 1, **caractérisé en ce que** le dispositif de prétension est conçu sous forme de prétensionneur à boucle et une boucle de ceinture (15) du système de retenue est fixée à l'autre extrémité du composant de ceinture de sécurité.

3. Système de retenue selon la revendication 1, **caractérisé en ce que** l'enrouleur de ceinture est réalisé sous forme de prétensionneur à garniture d'extrémité recevant l'extrémité de la ceinture de sécurité.
